# EUROPEAN PATENT APPLICATION

(11) **EP 4 765 275 A1**
(43) Date of publication of application: **24.06.2026**
(21) Application number: 25837610.2
(22) Date of filing: 07.07.2025
(51) Int. Cl.: H01M 10/04, H01M 10/058, H01M 10/42, H01M 50/183

(54) **BATTERY CELL MANUFACTURING APPARATUS AND MANUFACTURING METHOD**

(30) Priority: 10.07.2024 KR 20240091254
(71) Applicant: LG Energy Solution, Ltd., Seoul 07335 (KR)
(72) Inventor: HAN, Jin Woo, Daejeon 34122 (KR)
(74) Representative: Plasseraud IP
(86) International application number: PCT/KR2025/009711
(87) International publication number: WO 2026/014833

(57) **Abstract**

An apparatus for manufacturing a battery cell according to an embodiment of the present disclosure includes a vacuum chamber in which a semi-finished battery cell is placed, the semi-finished battery cell including an accommodation portion accommodating an electrolyte solution and an electrode assembly, and a gas pocket portion connected to the accommodation portion and located higher than the accommodation portion; a piercing unit configured to form a degassing hole in the gas pocket portion by piercing; a sealing tool configured to form a temporary sealing portion across between the degassing hole and the accommodation portion, and form a sealing area including the temporary sealing portion while the sealing tool moves up in a state of being in contact with the gas pocket portion; a cutting unit configured to cut off a portion of an upper part of the gas pocket portion to form an opening after the temporary sealing portion is formed; and a spray unit configured to spray gas into the opening.

## Description

### TECHNICAL FIELD

### CROSS-REFERENCE TO RELATED APPLICATIONS

This application is based on and claims priority from Korean Patent Application No. 10-2024-0091254 filed on July 10, 2024 with the Korean Intellectual Property Office, the disclosure of which is incorporated herein in its entirety by reference.

### TECHNICAL FIELD

The present disclosure relates to an apparatus and method for manufacturing a battery cell in which an electrode assembly is filled with an electrolyte solution.

### BACKGROUND

In general, a secondary battery includes a positive electrode and a negative electrode separated by a separator and an electrolyte that facilitates ion migration between the two electrodes to supply electrical energy. The secondary battery generally uses a liquid electrolyte solution as the electrolyte that facilitates ion movement in the battery.

A battery cell may include an electrode assembly including the positive electrode and the negative electrode and the separator that separates the positive electrode from the negative electrode, and an outer packaging accommodating the electrode assembly.

A process of manufacturing the battery cell includes a degassing process for releasing gas produced by activation of the electrode assembly, and a sealing process for sealing the battery cell after the degassing process.

The degassing process is done by releasing gas through a degassing hole of the battery cell inside a vacuum chamber due to a pressure difference between inside and outside of the battery cell.

However, during the degassing process, there is a high likelihood that a portion of the electrolyte solution is released together with the gas or moves upwards and remains on the inner surface of the battery cell. Accordingly, during a sealing process of the battery cell, the electrolyte solution remaining on the inner surface of the sealing area of the battery cell is vaporized due to high temperature, causing bubble-shaped unsealing, resulting in low sealing quality and low insulation resistance of the battery cell.

### DISCLOSURE

### TECHNICAL PROBLEM

The present disclosure is directed to providing an apparatus and method for manufacturing a battery cell with improved sealing quality of a sealing area by removing an electrolyte solution remaining on the inner surface of a gas pocket portion.

### TECHNICAL SOLUTION

An apparatus for manufacturing a battery cell according to an embodiment of the present disclosure includes a vacuum chamber in which a semi-finished battery cell is placed, the semi-finished battery cell including an accommodation portion accommodating an electrolyte solution and an electrode assembly, and a gas pocket portion connected to the accommodation portion and located higher than the accommodation portion; a piercing unit configured to form a degassing hole in the gas pocket portion by piercing; a sealing tool configured to form a temporary sealing portion across between the degassing hole and the accommodation portion, and form a sealing area including the temporary sealing portion while the sealing tool moves up in a state of being in contact with the gas pocket portion; a cutting unit configured to cut off a portion of an upper part of the gas pocket portion to form an opening after the temporary sealing portion is formed; and a spray unit configured to spray gas into the opening.

The spray unit may include a main body; and a nozzle disposed at a lower end portion of the main body and configured to spray the gas into the opening.

The spray unit may be configured to spray the gas of higher temperature than room temperature.

The apparatus for manufacturing the battery cell may further include a suction unit configured to suck the electrolyte solution scattered by the gas sprayed from the spray unit.

The suction unit may include first and second suction portions at two sides with the spray unit positioned therebetween.

Each of the first suction portion and the second suction portion may include a main body; and a sloping portion connected to a lower end portion of the main body and inserted into the opening to spread the opening apart. The sloping portion of the first suction portion and the sloping portion of the second suction portion may be closer to each other as facing downwards.

A lower end of the sloping portion may be located lower than a lower end of the spray unit.

The sloping portion may have a suction hole in an inner surface to suck the scattered electrolyte solution.

A horizontal thickness of the sloping portion may become thinner as facing downwards.

The spray unit and the suction unit may move up while maintaining a distance with respect to the sealing tool when the sealing tool moves up.

The sealing tool may form the temporary sealing portion at a location closer to the accommodation portion in the degassing hole and the accommodation portion.

The cutting unit may cut off the portion of the upper part of the gas pocket portion along an imaginary cutting line passing between the degassing hole and the temporary sealing portion.

A method for manufacturing a battery cell according to an embodiment of the present disclosure includes the steps of placing a semi-finished battery cell in a vacuum chamber, the semi-finished battery cell including an accommodation portion accommodating an electrolyte solution and an electrode assembly, and a gas pocket portion connected to the accommodation portion and located higher than the accommodation portion; forming a degassing hole in the gas pocket portion by piercing; forming, by a sealing tool, a temporary sealing portion across between the degassing hole and the accommodation portion; cutting off a portion of an upper part of the gas pocket portion to form an opening; and forming a sealing area including the temporary sealing portion. The step of forming the sealing area may include the steps of spraying, by a spray unit, gas into the opening; and moving the sealing tool up toward the opening while in contact with the gas pocket portion.

The spray unit may spray the gas of higher temperature than room temperature.

The step of forming the sealing area may further include the step of sucking, by a suction unit, the electrolyte solution scattered by the gas sprayed from the spray unit.

The opening may be spread apart by the suction unit, and the spray unit may spray the gas into the opening spread apart.

The spray unit and the suction unit may move up while maintaining a distance with respect to the sealing tool.

The step of forming the opening may include the step of cutting off the gas pocket portion along an imaginary cutting line passing between the degassing hole and the temporary sealing portion.

The step of forming the temporary sealing portion may include the step of forming the temporary sealing portion at a location closer to the accommodation portion in the degassing hole and the accommodation portion.

The method for manufacturing the battery cell may further include the step of trimming a portion of an upper part of the sealing area.

### ADVANTAGEOUS EFFECTS

According to an exemplary embodiment of the present disclosure, as the residual electrolyte solution in the gas pocket portion is removed by the spray unit, the sealing area free of residual electrolyte solution may be formed. Accordingly, the sealing quality of the sealing area is improved, and there is no risk of decreased insulation resistance of the battery cell or moisture infiltration into the battery cell from the outside.

In addition, the suction unit may suck the electrolyte solution scattered by gas sprayed from the spray unit. Accordingly, it may be possible to prevent the surroundings of the battery cell from being contaminated with the electrolyte solution.

The effects of the present disclosure may include effects that can be easily predicted by those skilled in the art from the configurations according to exemplary embodiments of the present disclosure.

### BRIEF DESCRIPTION OF THE DRAWINGS

The accompanying drawings illustrate exemplary embodiments of the present disclosure and together with the following detailed description, serve to provide a better understanding of the technical aspects of the present disclosure, and thus the present disclosure should not be construed as being limited to the drawings.
FIG. 1 is an assembly diagram of a battery cell.
FIG. 2 is a diagram of a battery cell placed in a vacuum chamber.
FIGS. 3 to 8 are cut-away perspective views of a battery cell illustrating the sequential operation of an apparatus for manufacturing the battery cell according to an embodiment of the present disclosure.
FIG. 9 is a flowchart of a method for manufacturing a battery cell according to another embodiment of the present disclosure.
FIG. 10 is a detailed flowchart of step S50 shown in FIG. 9.

### BEST MODE

Hereinafter, the exemplary embodiments of the present disclosure will be described with reference to the accompanying drawings in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

In the drawings, each component of a secondary battery according to an embodiment of the present disclosure is schematically depicted, and the size of the component or the thickness of the line may be exaggerated to some extent for convenience of understanding.

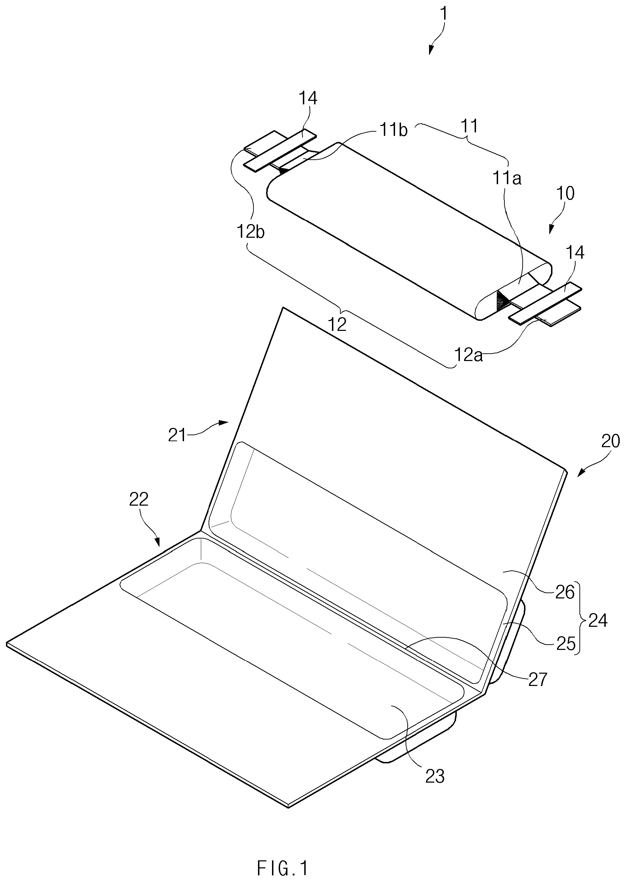

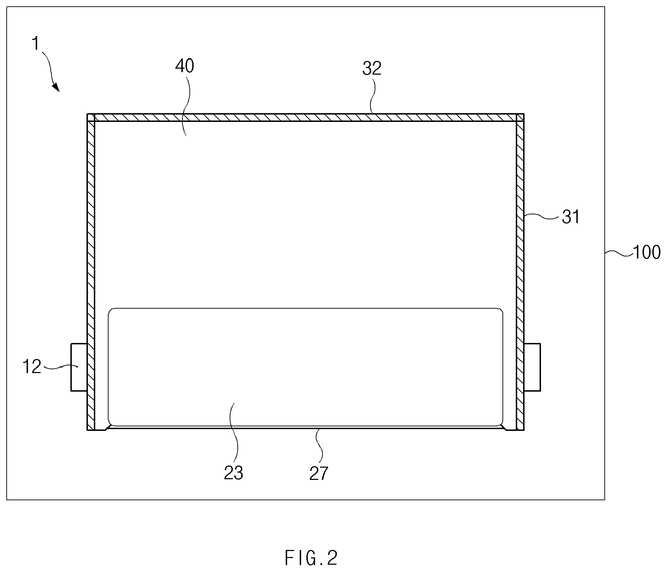

FIG. 1 is an assembly diagram of a battery cell, and FIG. 2 is a diagram of the battery cell placed in a vacuum chamber.

The battery cell 1 as described herein may be in a state at a specific time in the manufacturing process, and may be properly interpreted according to the context or needs. That is, the battery cell 1 may be a semi-finished battery cell.

The battery cell 1 may include an electrode assembly 10 and an outer packaging 20 for secondary batteries (hereinafter 'outer packaging').

The electrode assembly 10 may be formed by stacking a positive electrode and a negative electrode in an alternating manner with a separator interposed between them. That is, the electrode assembly 10 may include the plurality of electrodes and the separator interposed between the plurality of electrodes to insulate them from each other. The electrode assembly 10 may be housed in the outer packaging 20, more specifically, an accommodation portion 23 as described below, together with an electrolyte solution.

The electrode assembly 10 may come in different types, for example, a stack type, a jellyroll type or a stack-and-fold type, and the type of the electrode assembly 10 is not limited thereto.

The electrode assembly 10 may include an electrode tab 11. The electrode tab 11 may be connected to each of the positive electrode and the negative electrode of the electrode assembly 10 and protrude outward from the electrode assembly 10 to act as a pathway for the movement of electrons between the inside and outside of the electrode assembly 10.

The electrode tab 11 may be formed by tailoring an uncoated portion of an electrode current collector or connecting a conductor to the uncoated portion using ultrasonic welding.

The electrode tab 11 may include a positive electrode tab 11a connected to the positive electrode, and a negative electrode tab 11b connected to the negative electrode. The positive electrode tab 11a and the negative electrode tab 11b may protrude in different directions of the electrode assembly 10, but they are not limited thereto and may protrude in various directions, for example, protruding side by side in the same direction from one side.

An electrode lead 12 may be connected to the electrode tab 11 of the electrode assembly 10 to supply electricity to the outside of the battery cell 1. In addition, a part of the electrode lead 12 may be surrounded by an insulator 14. The insulator 14 may be sealed between a first sheet portion 21 and a second sheet portion 22. Accordingly, the insulator 14 may insulate the electrode lead 12 from the outer packaging 20 and maintain the sealing of the outer packaging 20. In general, the insulator 14 includes an insulating tape that is easy to attach it to the electrode lead 12 and has a relatively small thickness, but is not limited thereto and may include any insulating element that insulates the electrode lead 12.

The electrode lead 12 may be connected to the electrode tab 11 at one end and protrude outward from the outer packaging 20 at the other end. The electrode lead 12 may include a positive electrode lead 12a connected to the positive electrode tab 11a and a negative electrode lead 12b connected to the negative electrode tab 11b.

The electrode lead 12 may electrically connect the electrode assembly 10 to an external load. In addition, as each of the positive electrode tab 11a and the negative electrode tab 11b protrudes toward various directions, each of the positive electrode lead 12a and the negative electrode lead 12b may also extend toward various directions.

The outer packaging 20 may accommodate the electrode assembly 10 inside. For example, the outer packaging 20 may include a pouch type case formed by a laminate sheet forming process. More specifically, the outer packaging 20 may be manufactured by draw forming a flexible laminate sheet using a die and a punch, and stretching parts of the laminate sheet to form the accommodation portion 23 having a pocket-shaped accommodation space.

However, the configuration of the accommodation portion 23 is not limited thereto, and the accommodation portion 23 may be formed by any method other than the illustrated method. For example, the accommodation portion 23 may be formed by folding the laminate sheet into a preset shape.

Hereinafter, the outer packaging 20 may be in a state at a specific time in the manufacturing process or a finally completed state. That is, the description of the outer packaging 20 may encompass the unfolded state as shown in FIG. 1 and the sealed state shown in FIG. 2, and may be properly interpreted according to the context or needs.

The outer packaging 20 in which the electrode assembly 10 is housed with a part of the electrode lead 12 exposed may be sealed.

The outer packaging 20 may include the first sheet portion 21 and the second sheet portion 22 sealed together with the electrode assembly 10 positioned therebetween.

The first sheet portion 21 and the second sheet portion 22 may be connected to each other by a folding portion 27. However, the first sheet portion 21 and the second sheet portion 22 are not limited to thereto and may be separate components that are separated from each other.

When the folding portion 27 is folded, the first sheet portion 21 and the second sheet portion 22 may face each other. The folding portion 27 may extend parallel to the length direction of the electrode assembly 10, but is not limited thereto.

The accommodation portion 23 may be formed in the first sheet portion 21, and the second sheet portion 22 may cover the accommodation portion 23. The accommodation portion 23 may have a recessed shape.

As shown in FIG. 1, the accommodation portion 23 may be formed in the second sheet portion 22. The accommodation portion 23 of the first sheet portion 21 and the accommodation portion 23 of the second sheet portion 22 may be in communication with each other to form the accommodation space in which the electrode assembly 10 is housed. However, the present disclosure is not limited thereto, and the accommodation portion 23 may be only formed in the first sheet portion 21 and the second sheet portion 22 may be flat.

In each sheet portion 21, 22, an area around the accommodation portion 23 may form a terrace portion 24. That is, the outer packaging 20 according to an embodiment of the present disclosure may include the accommodation portion 23 having the recessed shape and the terrace portion 24 disposed around the accommodation portion 23.

The terrace portion 24 may include a pair of first terrace portions 25 at two sides with the accommodation portion 23 positioned between them, and a second terrace portion 26 connecting the pair of first terrace portions 25.

As an example, as shown in FIG. 1, the first terrace portion 25 may include the pair of first terrace portions 25 at two sides of the accommodation portion 23 in the length direction, and the second terrace portion 26 may connect the pair of first terrace portions 25 and be located at one side of the accommodation portion 23 in the width direction. The second terrace portion 26 may be located opposite the folding portion 27 with respect to the accommodation portion 23.

When the folding portion 27 is folded, the terrace portion 24 of each of the first sheet portion 21 and the second sheet portion 22 may contact each other. In this instance, the electrode lead 12 of the electrode assembly 10 may run between the first terrace portions 25 of the first and second sheet portions 21, 22. The insulator 14 may be located between the first terrace portions 25 of the first and second sheet portions 21, 22.

Two edge portions of the contact area of the first sheet portion 21 and the second sheet portion 22 may be joined by heat to form a first sealing portion 31. More specifically, the outer packaging 20 may have the first sealing portion 31 at the contact area of the two edge portions of the terrace portion 24 of each sheet portion 21, 22. For example, the first sealing portion 31 may be formed by joining polymer layers (for example, polypropylene), each polymer layer forming the innermost layer of each of the first sheet portion 21 and the second sheet portion 22.

The first sealing portion 31 may include a pair of first sealing portions at two sides with the accommodation portion 23 positioned between them. The first sealing portion 31 may extend in the length direction of the first terrace portion 25 of the first and second sheet portions 21, 22. The first sealing portion 31 may be formed at two sides of the accommodation portion 23 in the length direction. The electrode lead 12 may protrude outward from the outer packaging 20 through the first sealing portion 31.

A gas pocket portion 40 may be formed between the pair of first sealing portions 31. The gas pocket portion 40 may be the portion where the second terrace portion 26 of each sheet portion 21, 22 faces each other.

The inside of the gas pocket portion 40 may be in communication with the internal space of the accommodation portion 23. The gas pocket portion 40 may be located at one side (upper side on the basis of FIG. 2) of the accommodation portion 23. The gas pocket portion 40 may be located opposite the folding portion 27 with respect to the accommodation portion 23.

The gas pocket portion 40 may have a roughly envelope shape. Before a second sealing portion 32 of FIG. 2 is formed, the top of the gas pocket portion 40 may be open. An electrolyte solution may be injected into the battery cell 1 through the open top of the gas pocket portion 40. The electrolyte solution may flow into the accommodation portion 23 and fill the electrode assembly 10 within the accommodation portion 23.

For the smooth flow of the electrolyte solution into the accommodation portion 23, the electrolyte solution may be injected into the battery cell 1 standing upright. In this instance, the gas pocket portion 40 may be located higher than the accommodation portion 23.

When the injection of the electrolyte solution is completed, the open top of the gas pocket portion 40 may be sealed to form the second sealing portion 32. The second sealing portion 32 may extend in the length direction of the accommodation portion 23. The second sealing portion 32 may connect the pair of first sealing portions 31. The battery cell 1 having the first sealing portion 31 and the second sealing portion 32 may be referred to as semi-finished battery cell. That is, the semi-finished battery cell may include the accommodation portion 23 accommodating the electrolyte solution and the electrode assembly 10, and the gas pocket portion 40 connected to the accommodation portion 23.

After the second sealing portion 32 is formed, an activation process involving charging and discharging the battery cell 1 may be performed, and gas produced in the process may be captured in the gas pocket portion 40.

An apparatus for manufacturing the battery cell according to an embodiment of the present disclosure may include the vacuum chamber 100.

To release the gas captured in the gas pocket portion 40, the battery cell 1 may be placed in the vacuum chamber 100. As described above, the battery cell 1 at this time may be referred to as the semi-finished battery cell. The vacuum chamber 100 may refer to a chamber in which the internal pressure may be adjusted below the atmospheric pressure. The time to place the battery cell 1 in the vacuum chamber 100 is not limited to a particular time.

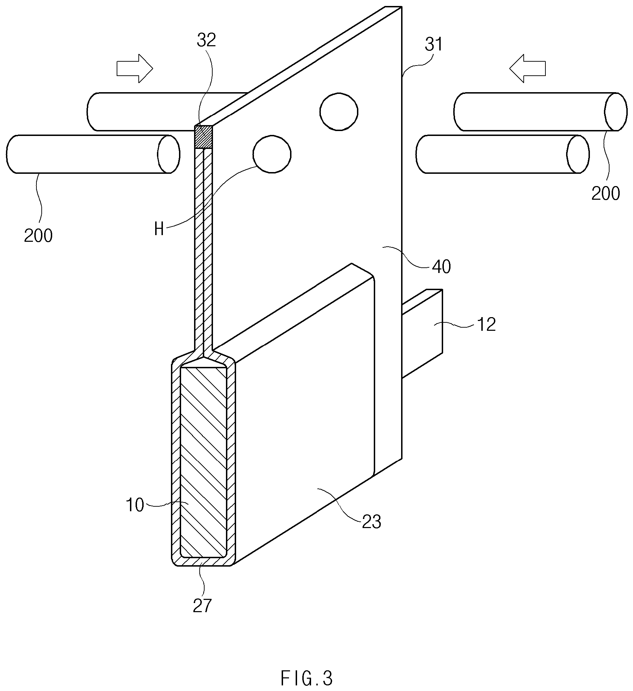

FIGS. 3 to 8 are cut-away perspective views of the battery cell illustrating the sequential operation of the apparatus for manufacturing the battery cell according to an embodiment of the present disclosure.

Referring to FIG. 3, the apparatus for manufacturing the battery cell according to an embodiment of the present disclosure may include a piercing unit 200 to form a degassing hole H in the gas pocket portion 40 by piercing.

The piercing unit 200 may be configured to form the degassing hole H in the gas pocket portion 40 by piercing. Preferably, the piercing unit 200 may form a plurality of degassing holes H in the gas pocket portion 40 by piercing. For example, the piercing unit 200 may include a plurality of bars extending toward the gas pocket portion 40. However, the piercing unit 200 is not limited thereto, and may be configured in any way to form the degassing hole H by piercing.

When the degassing hole H is formed in the gas pocket portion 40 by piercing, the internal pressure of the vacuum chamber 100 may be lowered. Alternatively, the degassing hole H may be formed in the gas pocket portion 40 by piercing in a state in which the internal pressure of the vacuum chamber 100 is kept low. Accordingly, gas within the battery cell 1 may be released to the outside through the degassing hole H due to a pressure difference between the inside and outside of the battery cell 1. The release of the gas may be referred to as degassing.

However, during the release of the gas through the degassing hole H, the electrolyte solution may attach or stick to the inner surface of the gas pocket portion 40. According to the conventional method, after degassing is completed, the sealing portion is formed in the gas pocket portion 40 between the accommodation portion 23 and the degassing hole H, and an area outside of the sealing portion is removed. However, the sealing quality of the sealing portion declines by the electrolyte solution remaining on the inner surface of the gas pocket portion 40. The present disclosure may solve this problem, and will be described in more detail below.

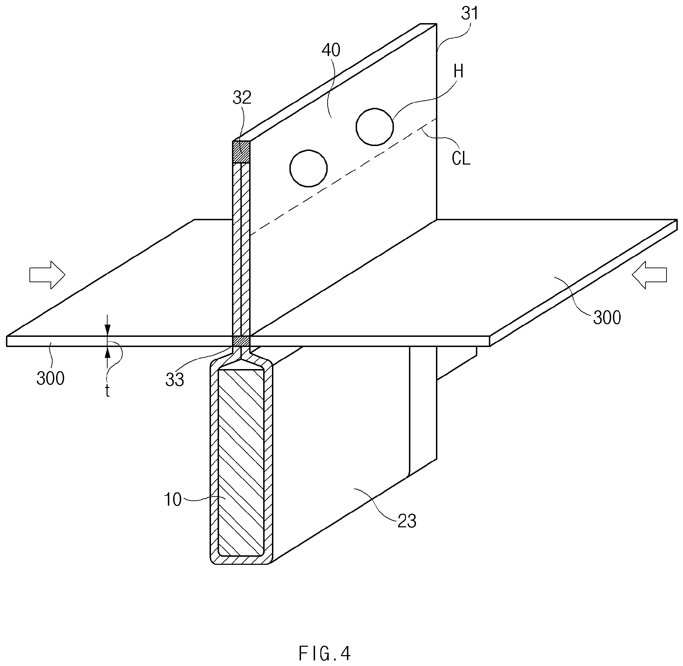

Referring to FIG. 4, the apparatus for manufacturing the battery cell according to an embodiment of the present disclosure may include a sealing tool 300 to form a temporary sealing portion 33 across between the degassing hole H and the accommodation portion 23.

The sealing tool 300 may apply heat and pressure to the gas pocket portion 40 to form the temporary sealing portion 33. For example, the sealing tool 300 heated to 180°C may apply pressure to the gas pocket portion 40.

The sealing tool 300 may be connected to a known movement device to make movements in horizontal and vertical directions.

The sealing tool 300 may form the temporary sealing portion 33 at a location closer to the accommodation portion 23 in the degassing hole H and the accommodation portion 23. That is, the distance between the temporary sealing portion 33 and the accommodation portion 23 may be smaller than the distance between the temporary sealing portion 33 and the degassing hole H. It may help to smoothly form a sealing area 34 as described below.

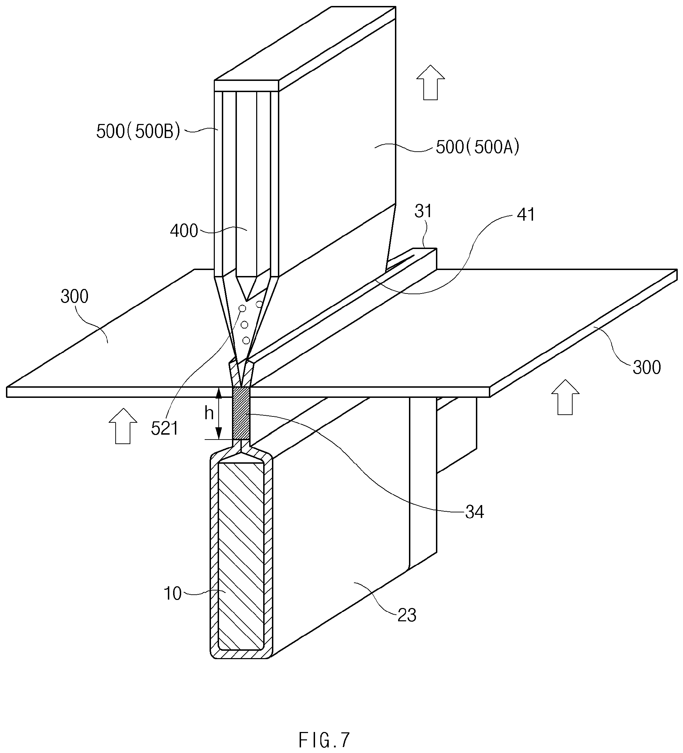

As will be described below, the sealing tool 300 may move up while in contact with the gas pocket portion 40 and form the sealing area 34 including the temporary sealing portion 33 (see FIG. 7). Accordingly, the sealing tool 300 may have a relatively small thickness dimension (t) compared to the height dimension (h) of the sealing area 34. Accordingly, the height dimension of the temporary sealing portion 33 corresponding to the thickness dimension (t) of the sealing tool 300 may be smaller. For example, the height dimension (h) of the sealing area 34 may be approximately 10 mm, and the thickness dimension (t) of the sealing tool 300, i.e., the height dimension of the temporary sealing portion 33 may be approximately 1 mm.

For example, the sealing tool 300 may include a horizontal plate portion. However, the sealing tool 300 is not limited thereto and may be configured in any way to form the temporary sealing portion 33 and the sealing area 34.

Additionally, FIG. 4 shows an example in which the sealing tool 300 is located at two sides of the gas pocket portion 40, but is not limited thereto. For example, a fixed support plate (not shown) may be provided at one side of the gas pocket portion 40, and the sealing tool 300 located at the other side of the gas pocket portion 40 may move toward the support plate to form the temporary sealing portion 33.

The accommodation portion 23 may be sealed by the temporary sealing portion 33 formed by the sealing tool 300. That is, the internal space of the accommodation portion 23 may be separated from the outside. Accordingly, any further release or flow of electrolyte solution and gas within the accommodation portion 23 may be prevented.

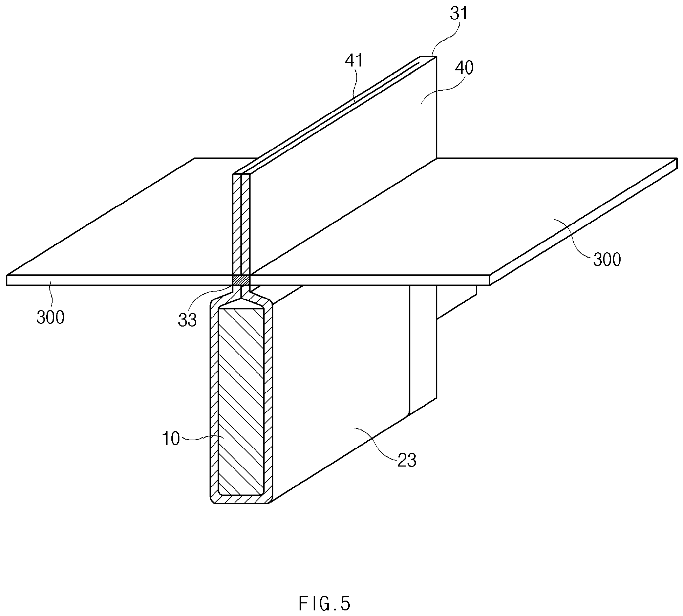

Referring to FIGS. 4 and 5, the apparatus for manufacturing the battery cell according to an embodiment of the present disclosure may include a cutting unit (not shown) to cut off a portion of the upper part of the gas pocket portion 40 to form an opening 41 after the temporary sealing portion 33 is formed.

For example, the cutting unit may include a knife or a laser cutter. However, the cutting unit is not limited thereto and may be configured in any way to cut off the gas pocket portion 40.

The cutting unit may cut off the portion of the upper part of the gas pocket portion 40 along an imaginary cutting line CL passing between the degassing hole H and the temporary sealing portion 33. That is, the degassing hole H and the second sealing portion 32 may be removed. In addition, the opening 41 corresponding to the cutting line CL may be formed. The opening 41 may refer to a gap between the edges of the first sheet portion 21 and the second sheet portion 22.

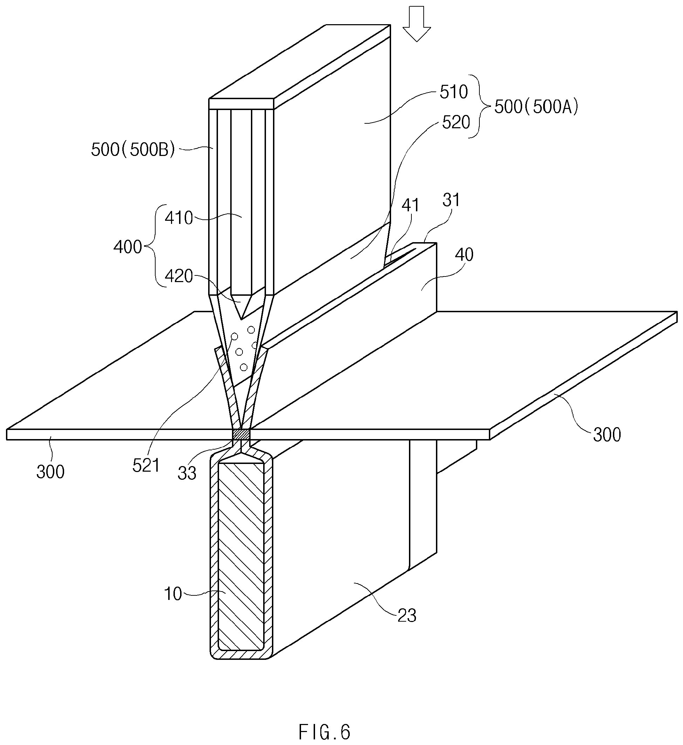

Referring to FIG. 6, the apparatus for manufacturing the battery cell according to an embodiment of the present disclosure may include a spray unit 400 to spray gas into the opening 41.

The spray unit 400 may be configured to spray gas into the opening 41. Thus, the electrolyte solution remaining on the inner surface of the gas pocket portion 40 may be vaporized and scattered. As the electrolyte solution remaining on the inner surface of the gas pocket portion 40 is removed, it may be possible to prevent the decline in sealing quality of the sealing area 34 when the sealing tool 300 forms the sealing area 34 afterward.

Preferably, the spray unit 400 may be configured to spray gas of higher temperature than room temperature. For example, the spray unit 400 may spray heated air. Accordingly, the electrolyte solution remaining on the inner surface of the gas pocket portion 40 may be vaporized more effectively.

The spray unit 400 may be configured to move up. For example, a main body 410 of the spray unit 400 may be connected to a known lifting device.

The spray unit 400 may include the main body 410 and a nozzle 420. The main body 410 may stand approximately upright. The nozzle 420 may be provided at the lower end portion of the main body 410. The nozzle 420 may spray gas into the opening 41. The nozzle 420 may spray gas downward. The nozzle 420 may extend in the length direction of the opening 41, or may include a plurality of nozzles arranged in the length direction of the opening 41.

Referring to FIG. 6, the apparatus for manufacturing the battery cell may further include a suction unit 500 to suck the electrolyte solution scattered by the gas sprayed from the spray unit 400.

The suction unit 500 may be positioned around the spray unit 400 and configured to suck the electrolyte solution scattered from the opening 41. Accordingly, it may be possible to prevent the surroundings of the battery cell 1 from being contaminated with the electrolyte solution.

More specifically, the suction unit 500 may include a first suction portion 500A and a second suction portion 500B at two sides with the spray unit 400 positioned between them. Accordingly, it may be possible to suck the scattered electrolyte solution more reliably.

The suction unit 500 may be configured to move up and down. For example, a main body 510 of the suction unit 500 may be connected to a known lifting device. In addition, the spray unit 400 and the suction unit 500 may be lifted together by a single lifting device.

The first suction portion 500A and the second suction portion 500B may be spaced apart in a direction in which the opening 41 is spread apart, i.e., in a direction in which the first sheet portion 21 and the second sheet portion 22 of the outer packaging 20 face each other.

Each of the first suction portion 500A and the second suction portion 500B may include the main body 510 and a sloping portion 520. The main body 510 may stand approximately upright.

The sloping portion 520 may be connected to the lower end portion of the main body 510. The sloping portion 520 may be inserted into the opening 41 to spread the opening 41 apart. To this end, the sloping portion 520 of the first suction portion 500A and the sloping portion 520 of the second suction portion 500B may be closer to each other as facing downwards. In addition, the horizontal thickness of each sloping portion 520 may become thinner as facing downwards.

Accordingly, the two sloping portions 520 may easily enter the opening 41, and when the suction unit 500 moves down, the opening 41 may be spread apart.

The lower end of each sloping portion 520 may be located lower than the lower end of the spray unit 400. That is, the lower end of each sloping portion 520 may be located lower than the lower end of the nozzle 420. Thus, the nozzle 420 of the spray unit 400 may spray gas toward between the two sloping portions 520. Accordingly, the spray unit 400 may smoothly spray gas into the opening 41 spread apart by the two sloping portions 520, and the electrolyte solution remaining on the inner surface of the gas pocket portion 40 may be vaporized and scattered faster.

Each sloping portion 520 may have a suction hole 521 in the inner surface to suck the scattered electrolyte solution. The inner surface of the sloping portion 520 may refer to respective surfaces of the two sloping portions 520 facing each other. Preferably, the suction hole 521 includes a plurality of suction holes. Accordingly, it may be possible to suck the scattered electrolyte solution more reliably.

Referring to FIG. 7, the sealing tool 300 may form the sealing area 34 including the temporary sealing portion 33 while the sealing tool 300 moves up in contact with the gas pocket portion 40.

The sealing tool 300 may move up while applying heat and pressure to the gas pocket portion 40 and form the sealing area 34 having the predetermined height dimension (h).

As described above, as the residual electrolyte solution in the gas pocket portion 40 is removed by the spray unit 400, the sealing area 34 free of residual electrolyte solution may be formed. Accordingly, the sealing quality of the sealing area 34 is improved, so there is no risk of decreased insulation resistance of the battery cell 1 or moisture infiltration into the battery cell 1 from the outside.

When the sealing tool 300 moves up, the spray unit 400 and the suction unit 500 may move up while maintaining the distance with respect to the sealing tool 300. Accordingly, the spray unit 400 may completely remove the residual electrolyte solution in the gas pocket portion 40 with reliability, and further, the suction unit 500 may suck the scattered electrolyte solution more reliably.

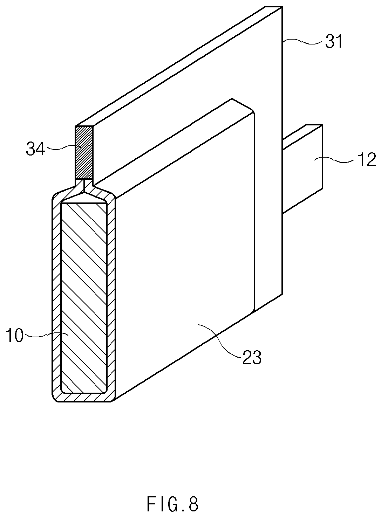

Referring to FIG. 8, the sealing area 34 may be formed and the manufacture of the battery cell 1 may be completed. When the sealing area 34 is formed, the pressure in the vacuum chamber 100 (see FIG. 2) may be restored from the low-pressure state. Alternatively, the battery cell 1 may be transported out of the vacuum chamber 100.

In addition, if necessary, a portion of the upper part of the sealing area 34 may be trimmed. The trimming may be performed by the above-described cutting unit or by a trimming unit (not shown). For example, the trimming unit may be a knife or a laser cutter. However, the trimming unit is not limited thereto.

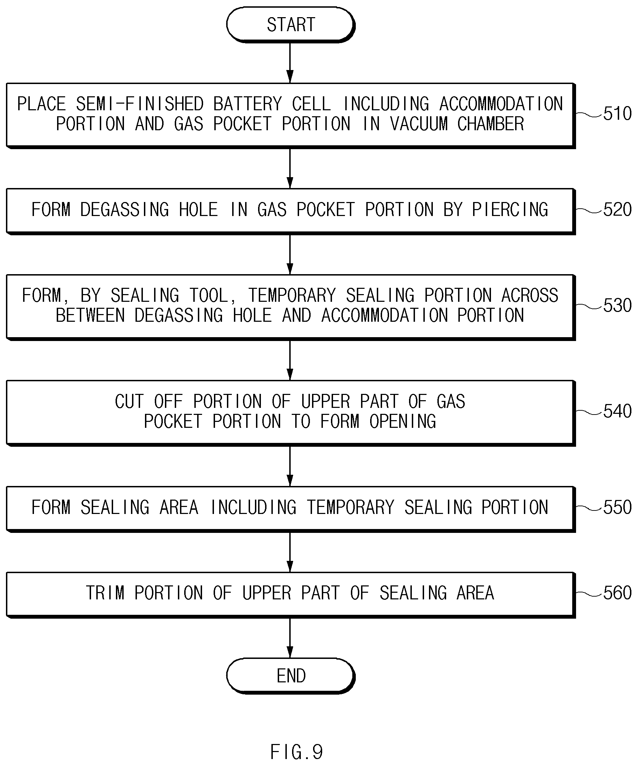

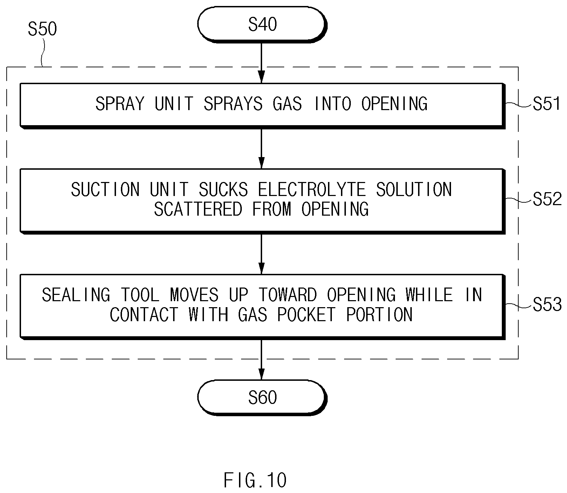

FIG. 9 is a flowchart of a method for manufacturing a battery cell according to another embodiment of the present disclosure, and FIG. 10 is a detailed flowchart of step S50 shown in FIG. 9.

Hereinafter, the method for manufacturing the battery cell that may be performed by the apparatus for manufacturing the battery cell will be described as another embodiment of the present disclosure. Accordingly, reference may be made to the above description.

The method for manufacturing the battery cell according to another embodiment of the present disclosure (hereinafter, 'manufacturing method') may include the step (S10) of placing the battery cell 1 including the accommodation portion 23 and the gas pocket portion 40 inside the vacuum chamber 100. The battery cell 1 may have the first sealing portion 31 and the second sealing portion 32, and may have undergone the activation process.

The manufacturing method may include the step (S20) of forming the degassing hole H in the gas pocket portion 40 by piercing. The piercing unit 200 may form the degassing hole H in the gas pocket portion 40 by piercing. Accordingly, gas within the battery cell 1 may be released to the outside through the degassing hole H due to a pressure difference between the inside and outside of the battery cell 1.

The manufacturing method may include the step (S30) of forming, by the sealing tool 300, the temporary sealing portion 33 across between the degassing hole H and the accommodation portion 23. The sealing tool 300 may apply heat and pressure to the gas pocket portion 40 to form the temporary sealing portion 33. The temporary sealing portion 33 may be formed at a location closer to the accommodation portion 23 in the degassing hole H and the accommodation portion 23.

The manufacturing method may include the step (S40) of cutting off a portion of the upper part of the gas pocket portion 40 to form the opening 41. The cutting unit may cut off the portion of the upper part of the gas pocket portion 40 along the imaginary cutting line CL passing between the degassing hole H and the temporary sealing portion 33. That is, the gas pocket portion 40 may be cut off along the imaginary cutting line CL. Accordingly, the opening 41 corresponding to the cutting line CL may be formed.

The manufacturing method may further include the step (S50) of forming the sealing area 34 including the temporary sealing portion 33.

More specifically, the step (S50) of forming the sealing area 34 may include the step (S51) of spraying, by the spray unit 400, gas into the opening 41 and the step (S53) of moving the sealing tool 300 up toward the opening 41 while in contact with the gas pocket portion 40. In addition, the step (S50) of forming the sealing area 34 may further include the step (S52) of sucking, by the suction unit 500, the electrolyte solution scattered by the gas sprayed from the spray unit 400.

Although FIG. 10 shows that the steps S51 to S53 are performed in a sequential order, the present disclosure is not limited thereto, and two or more steps may be performed at the same time.

The spray unit 400 may spray gas of higher temperature than room temperature. The electrolyte solution remaining on the inner surface of the gas pocket portion 40 may be vaporized and scattered by the spray unit 400. Accordingly, the step (S53) of moving the sealing tool 300 up may help to prevent the decline in sealing quality of the sealing area 34.

The suction unit 500 may suck the electrolyte solution scattered by the gas sprayed from the spray unit 400. Accordingly, it may be possible to prevent the surroundings of the battery cell 1 from being contaminated with the electrolyte solution.

The opening 41 may be spread apart by the suction unit 500, and the spray unit 400 may spray gas into the opening 41 spread apart. Accordingly, the electrolyte solution remaining on the inner surface of the gas pocket portion 40 may be vaporized and scattered faster.

In the step (S50) of forming the sealing area 34, the spray unit 400 and the suction unit 500 may move up while maintaining the distance with respect to the sealing tool 300. Accordingly, it may be possible to completely remove the residual electrolyte solution in the gas pocket portion 40 with reliability, and suck the scattered electrolyte solution more reliably.

Meanwhile, the manufacturing method may further include the step (S60) of trimming a portion of the upper part of the sealing area 34. Accordingly, appearance quality of the battery cell 1 may be improved and energy density may be reduced.

While the present disclosure has been hereinabove described to describe the technical aspects of the present disclosure, persons having ordinary skill in the technical field pertaining to the present disclosure will appreciate that a variety of changes and modifications may be made thereto without departing from the essential features of the present disclosure.

Therefore, the disclosed embodiments are provided to describe the technical aspects of the present disclosure but not intended to be limiting, and the technical scope of the present disclosure is not limited by these embodiments.

The scope of protection of the present disclosure should be interpreted by the appended claims, and it should be understood that the scope of protection of the present disclosure encompasses all the technical aspects within the equivalent scope.

**[List of Reference Numerals]**

| | | | |
|---|---|---|---|
| 1: | Battery cell | 10: | Electrode assembly |
| 12: | Electrode lead | 20: | Outer packaging |
| 21: | First sheet portion | 22: | Second sheet portion |
| 23: | Accommodation portion | 31: | First sealing portion |
| 32: | Second sealing portion | 33: | Temporary sealing portion |
| 34: | Sealing area | 40: | Gas pocket portion |
| 41: | Opening | 100: | Vacuum chamber |
| 200: | Piercing unit | 300: | Sealing tool |
| 400: | Spray unit | 410: | Main body |
| 420: | Nozzle | 500: | Suction unit |
| 500A: | First suction portion | 500B: | Second suction portion |
| 510: | Main body | 520: | Sloping portion |
| 521: | Suction hole | | |

## Claims

1. An apparatus for manufacturing a battery cell comprising:
a vacuum chamber in which a semi-finished battery cell is placed, the semi-finished battery cell including an accommodation portion accommodating an electrolyte solution and an electrode assembly, and a gas pocket portion connected to the accommodation portion and located higher than the accommodation portion;
a piercing unit configured to form a degassing hole in the gas pocket portion by piercing;
a sealing tool configured to form a temporary sealing portion across between the degassing hole and the accommodation portion, and form a sealing area including the temporary sealing portion while the sealing tool moves up in a state of being in contact with the gas pocket portion;
a cutting unit configured to cut off a portion of an upper part of the gas pocket portion to form an opening after the temporary sealing portion is formed; and
a spray unit configured to spray gas into the opening.

2. The apparatus for manufacturing the battery cell according to claim 1,
wherein the spray unit includes:
a main body; and
a nozzle disposed at a lower end portion of the main body and configured to spray
the gas into the opening.

3. The apparatus for manufacturing the battery cell according to claim 1,
wherein the spray unit is configured to spray the gas of higher temperature than room temperature.

4. The apparatus for manufacturing the battery cell according to claim 1, further comprising:
a suction unit configured to suck the electrolyte solution scattered by the gas sprayed from the spray unit.

5. The apparatus for manufacturing the battery cell according to claim 4,
wherein the suction unit includes first and second suction portions at two sides with the spray unit positioned therebetween.

6. The apparatus for manufacturing the battery cell according to claim 5,
wherein each of the first suction portion and the second suction portion includes:
a main body; and
a sloping portion connected to a lower end portion of the main body and inserted into the opening to spread the opening apart, and
wherein the sloping portion of the first suction portion and the sloping portion of the second suction portion are closer to each other as facing downwards.

7. The apparatus for manufacturing the battery cell according to claim 6,
wherein a lower end of the sloping portion is located lower than a lower end of the spray unit.

8. The apparatus for manufacturing the battery cell according to claim 6,
wherein the sloping portion has a suction hole in an inner surface to suck the scattered electrolyte solution.

9. The apparatus for manufacturing the battery cell according to claim 6,
wherein a horizontal thickness of the sloping portion becomes thinner as facing downwards.

10. The apparatus for manufacturing the battery cell according to claim 4,
wherein the spray unit and the suction unit move up while maintaining a distance with respect to the sealing tool when the sealing tool moves up.

11. The apparatus for manufacturing the battery cell according to claim 1,
wherein the sealing tool forms the temporary sealing portion at a location closer to the accommodation portion in the degassing hole and the accommodation portion.

12. The apparatus for manufacturing the battery cell according to claim 1,
wherein the cutting unit cuts off the portion of the upper part of the gas pocket portion along an imaginary cutting line passing between the degassing hole and the temporary sealing portion.

13. A method for manufacturing a battery cell comprising the steps of:
placing a semi-finished battery cell in a vacuum chamber, the semi-finished battery cell including an accommodation portion accommodating an electrolyte solution and an electrode assembly, and a gas pocket portion connected to the accommodation portion and located higher than the accommodation portion;
forming a degassing hole in the gas pocket portion by piercing;
forming, by a sealing tool, a temporary sealing portion across between the degassing hole and the accommodation portion;
cutting off a portion of an upper part of the gas pocket portion to form an opening; and
forming a sealing area including the temporary sealing portion,
wherein the step of forming the sealing area includes the steps of:
spraying, by a spray unit, gas into the opening; and
moving the sealing tool up toward the opening while in contact with the gas pocket portion.

14. The method for manufacturing the battery cell according to claim 13, wherein the spray unit sprays the gas of higher temperature than room temperature.

15. The method for manufacturing the battery cell according to claim 13,
wherein the step of forming the sealing area further includes the step of:
sucking, by a suction unit, the electrolyte solution scattered by the gas sprayed from the spray unit.

16. The method for manufacturing the battery cell according to claim 15,
wherein the opening is spread apart by the suction unit, and
wherein the spray unit sprays the gas into the opening spread apart.

17. The method for manufacturing the battery cell according to claim 15,
wherein the spray unit and the suction unit move up while maintaining a distance with respect to the sealing tool.

18. The method for manufacturing the battery cell according to claim 13,
wherein the step of forming the opening includes the step of cutting off the gas pocket portion along an imaginary cutting line passing between the degassing hole and the temporary sealing portion.

19. The method for manufacturing the battery cell according to claim 13,
wherein the step of forming the temporary sealing portion includes the step of forming the temporary sealing portion at a location closer to the accommodation portion in the degassing hole and the accommodation portion.

20. The method for manufacturing the battery cell according to claim 13, further comprising the step of:
trimming a portion of an upper part of the sealing area.
